# EUROPEAN PATENT APPLICATION

(11) **EP 2 600 003 A1**
(43) Date of publication of application: **05.06.2013**
(21) Application number: 12194884.8
(22) Date of filing: 29.11.2012
(51) Int. Cl.: F04B 53/00, F04B 53/22, F04B 17/03, F04C 15/00, F04D 29/60, F16M 7/00, B60T 17/02

(54) **Electric Pump**

(30) Priority: 01.12.2011 JP 2011263904; 21.06.2012 JP 2012139991
(71) Applicant: AISIN SEIKI KABUSHIKI KAISHA, Kariya-shi, Aichi-ken 448-8650 (JP)
(72) Inventor: Tamawari, Shinya, Kariya-shi, Aichi-ken, 448-8650 (JP); Uehara, Hiroyuki, Kariya-shi, Aichi-ken, 448-8650 (JP); Kojima, Yusuke, Kariya-shi, Aichi-ken, 448-0027 (JP); Sumitomo, Nozomu, Kariya-shi, Aichi-ken, 448-8650 (JP); Kitamura, Tadahiro, Kariya-shi, Aichi-ken, 448-8650 (JP)
(74) Representative: Winter, Brandl, Fürniss, Hübner, Röss, Kaiser, Polte - Partnerschaft

(57) **Abstract**

An electric pump (1) includes a motor (14), a bracket (4) including a support surface (4a) arranged to be perpendicular to a rotation shaft (14a) of the motor and a bush attachment bore (5) provided to be perpendicular to the support surface, and a bush (6, 60, 61) fitted to the bush attachment bore. The bush attachment bore includes a base portion (5a) formed in a shape similar to a portion of the bush fitted to the bush attachment bore, the bush attachment bore including an expansion portion (5b) integrally formed with the base portion and extending in a circumferential direction of the motor.

## Description

### TECHNICAL FIELD

This disclosure generally relates to an electric pump.

### BACKGROUND DISCUSSION

According to a known electric pump used in a vehicle, a pump body is attached to a bracket, for example, via a bush made of an elastic material such as rubber, for example. Because of the bush, vibration or oscillation generated at the pump body is damped before being transmitted to the bracket so that the vibration is inhibited from being transmitted to the other portion of the vehicle.

JP2006-112519A discloses an attachment structure for attaching an electric water pump (pump body) to an intermediate plate via a vibration-proof bush, and the intermediate plate is attached to a bracket via another vibration-proof bush.

The electric water pump is driven by rotations of a motor serving as a power source. In a case where the driving of the electric water pump is stopped, the number of rotations of the motor decreases and finally the motor is stopped. In a case where a greater vibration than a vibration in a normal rotating state of the motor occurs, i.e., the motor is brought in a resonant condition in the process from the start to the stop of the electric water pump or an inertia force is generated at a piston when the electric water pump is started or stopped, for example, the large vibration causes the entire electric water pump to oscillate or vibrate. As a result, the bush is unable to absorb such large vibration, which results in hitting or collision between the bush and the bracket to thereby generate a hitting sound or noise.

A need thus exists for an electric pump in which a bush and a bracket are unlikely to hit or collide so that a hitting sound is reduced even in a case where a greater vibration than a vibration in a normal rotating state of a motor occurs.

### SUMMARY

According to an aspect of this disclosure, an electric pump including a motor, a bracket including a support surface arranged to be perpendicular to a rotation shaft of the motor and a bush attachment bore provided to be perpendicular to the support surface, and a bush fitted to the bush attachment bore. The bush attachment bore includes a base portion formed in a shape similar to a portion of the bush fitted to the bush attachment bore, the bush attachment bore including an expansion portion integrally formed with the base portion and extending in a circumferential direction of the motor.

According to the aforementioned disclosure, in a case of a greater vibration than a vibration in a normal rotating state of the motor, the vibration in the circumferential direction (rotation direction) of the motor increases. Thus, the bush moving in the circumferential direction may hit or collide with the bracket. According to the disclosure, however, the bush attachment bore formed at the bracket extends or expands in the circumferential direction. Accordingly, the bush may be inhibited from hitting the bracket and an occurrence of hitting sound is reduced even when the motor vibrates and then the bush moves in the circumferential direction.

The expansion portion includes a width in a radial direction of the motor, the width gradually decreasing in a direction away from the base portion.

Because the width of the expansion portion in the radial direction of the motor is gradually decreasing in the direction away from the base portion in the circumferential direction of the motor, the bush is deformed when moving in the circumferential direction. According to the disclosure, even in a case where the bush moves in the circumferential direction by the vibration of the motor, the bush that is deformed is returned by a restoring force thereof to a position where the base portion is arranged after a larger vibration is substantially cleared. Thus, even in a case where the motor repeats driving and stopping and therefore the large vibration occurs, the bush is unlikely to hit the bracket, which results in a reduction of the occurrence of hitting sound.

The expansion portion is formed at each of both sides of the base portion in the circumferential direction of the motor.

In a case where the vibration of the motor continues for a long time period, the bush greatly moves in both directions, i.e., clockwise and counterclockwise directions. At this time, the expansion portions formed at both sides of the base portion in the circumferential direction of the motor inhibit a hitting of the bush relative to the bracket, which reduces the occurrence of hitting sound.

The base portion includes a circular form and the expansion portion includes a furthest point on an outer edge from a center of the base portion, the furthest point being positioned on a circumference of a circle of which a center corresponds to the rotation shaft of the motor and a radius corresponds to a distance from the rotation shaft to the center of the base portion.

A vibration direction of the motor when the motor vibrates greater than in the normal rotating state corresponds to a tangent direction of the circumference of the circle of which the center corresponds to the rotation shaft and the radius corresponds to the distance from the rotation shaft to the center of the base portion. In a case of an electric pump of which the aforementioned radius is small, the vibration direction greatly varies. According to the disclosure, the vibration direction matches the direction where the expansion portion is formed. Thus, even when the vibration direction varies greatly, the bush is unlikely to hit the bracket to thereby inhibit the occurrence of hitting sound.

### BRIEF DESCRIPTION OF THE DRAWINGS

The foregoing and additional features and characteristics of this disclosure will become more apparent from the following detailed description considered with the reference to the accompanying drawings, wherein:

Fig. 1 is a partial cross-sectional view of a pump body of an electric pump according to a first embodiment disclosed here;

Fig. 2 is perspective view of the electric pump according to the first embodiment;

Fig. 3 is a schematic view of a bracket according to the first embodiment;

Fig. 4 is an enlarged view of a bush attachment bore according to the first embodiment;

Fig. 5 is a cross-sectional view of a bush according to the first embodiment;

Fig. 6 is a partial cross-sectional view illustrating a state where the bracket is attached to a stay according to the first embodiment;

Fig. 7 is a cross-sectional view taken along line VII-VII in Fig. 6;

Fig. 8A is a partial cross-sectional view illustrating a state where an inner cylindrical portion hits an outer cylindrical portion via an elastic portion according to the first embodiment;

Fig. 8B is a partial cross-sectional view illustrating a state where an inner cylindrical portion hits an outer cylindrical portion via an elastic portion according to a known electric pump;

Fig. 9 is a graph illustrating a relationship between a displacement of the bush and a load generated at a wall surface of the bush attachment bore according to the first embodiment;

Fig. 10 is a schematic view of the bracket according to a second embodiment disclosed here;

Fig. 11 is a schematic view of the bracket according to a third embodiment disclosed here;

Fig. 12 is a schematic view of the bracket according to a fourth embodiment disclosed here;

Fig. 13 is a perspective view of a bush according to a fifth embodiment disclosed here;

Fig. 14 is a partial cross-sectional view illustrating a state where the bracket is attached to the stay via the bush according to the fifth embodiment;

Fig. 15 is a cross-sectional view taken along line XV-XV in Fig. 14;

Fig. 16 is a perspective view of a bush according to a sixth embodiment disclosed here;

Fig. 17 is a partial cross-sectional view illustrating a state where the bracket is attached to the stay via the bush according to the fifth embodiment; and

Fig. 18 is a cross-sectional view taken along line XVIII-XVIII in Fig. 17.

### DETAILED DESCRIPTION

### [First embodiment]

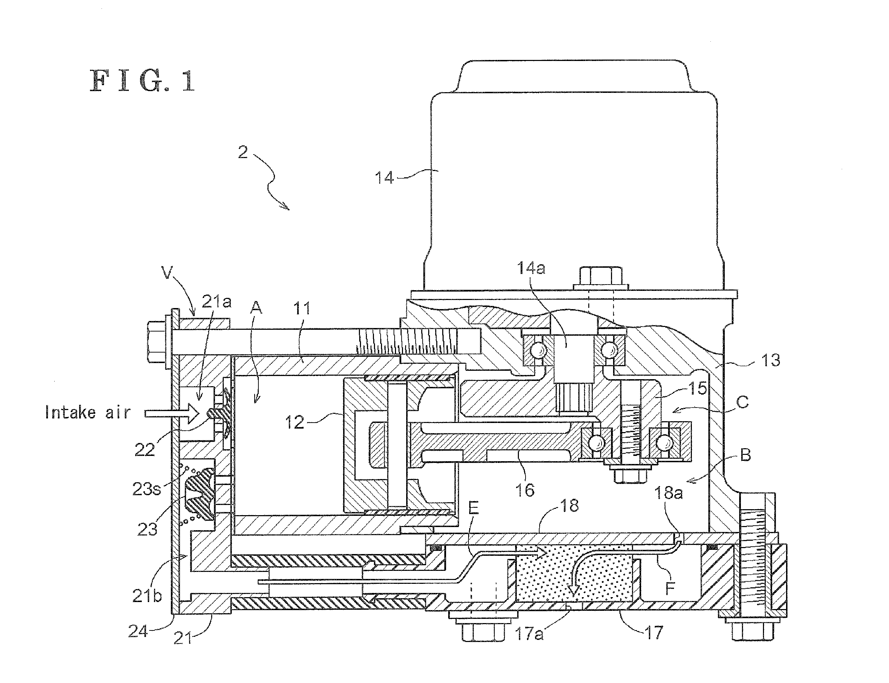

A first embodiment disclosed here will be explained below. As illustrated in Fig. 1, a pump body 2 includes a valve unit V arranged at a first end of a cylinder 11 (i.e., at a side where a cylinder head is provided). The cylinder 11 and a piston 12 form a pressure increasing and decreasing chamber A within the cylinder 11. The pump body 2 also includes a pump housing 13 arranged at a second end of the cylinder 11. The pump housing 13 includes an inner void forming a driving chamber B. The pump body 2 according to the first embodiment is used as a vacuum pump serving as a vacuum pressure source of a brake booster.

An electric motor 14, which will be hereinafter simply referred to as a motor 14, is accommodated within the pump housing 13. A crank arm 15 integrally rotates with a rotation shaft 14a, serving as an output shaft, of the motor 14. A base portion of a connecting rod 16, i.e., a right end side of a connecting rod 16 in Fig. 1, is connected to the crank arm 15 while an end portion of the connecting rod 16, i.e., a left end side of the connecting rod 16 in Fig. 1, is connected to the piston 12. The crank arm 15 and the connecting rod 16 constitute a crank mechanism C. When the motor 14 rotates, a rotation driving force of the rotation shaft 14a of the motor 14 is converted to a reciprocating force by the crank mechanism C, and the reciprocating force is then transmitted to the piston 12 so that the piston 12 performs a reciprocating operation.

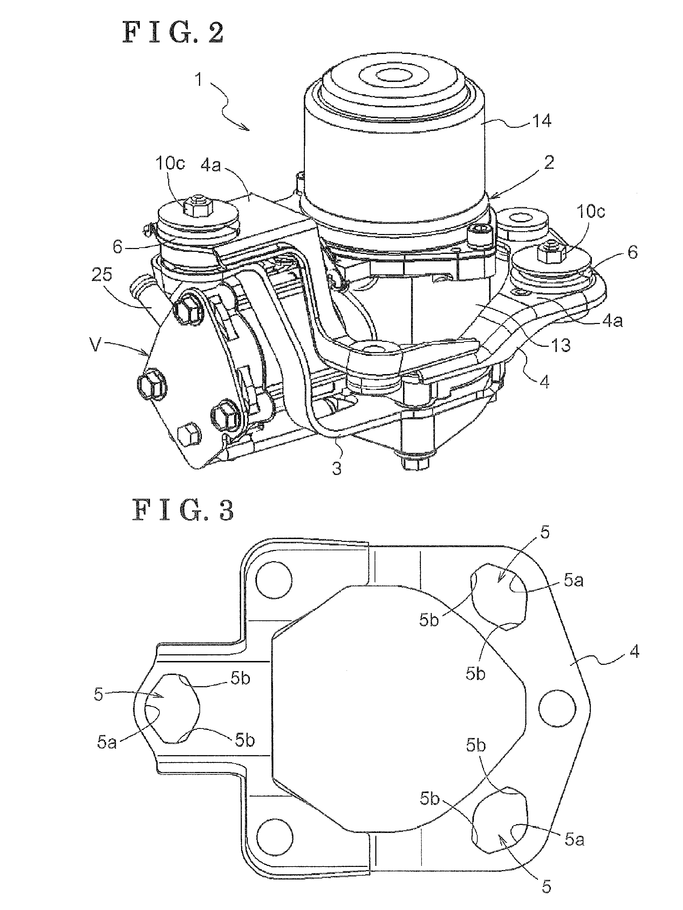

The valve unit V includes a valve body 21 having an air intake void 21a and an air exhaust void 21b, an intake valve 22, and an exhaust valve 23. The intake valve 22 is provided at a portion of the valve body 21 connected to the air intake void 21a. The exhaust valve 23 is provided at a portion of the valve body 21 connected to the air exhaust void 21b. The exhaust valve 23 is biased by a spring 23s in a direction where the pressure increasing and decreasing chamber A is closed or sealed. The valve unit V also includes a cover plate 24 for blocking the air intake void 21a and the air exhaust void 21b from the outside of the pump body 2. In order to generate a negative pressure at an object of an outside of the pump body 2 (i.e., an outside object), a tube 25 is connected to the air intake void 21a as illustrated in Fig. 2. A fluid passage E is formed from the air exhaust void 21b of the valve body 21 to a first opening 17a provided at an outer surface of a passage block 17.

The driving chamber B is defined by an opening portion of the pump housing 13 that is closed or blocked by a plate-shaped closing member 18. A second opening 18a is provided at the closing member 18. The passage block 17 including an inner void connected to the second opening 18a is arranged at an opposite side from the pump housing 13 relative to the closing member 18. An air flow passage F is formed from the second opening 18a to the first opening 17a provided at the outer surface of the passage block 17.

In a case where the piston 12 is operated in a direction where air is suctioned, i.e., in an air intake direction, the intake valve 22 is opened so that air flows through the tube 25 and suctioned into the pressure increasing and decreasing chamber A by passing through the air intake void 21a. Accordingly, the negative pressure is applied to the outside object. At this time, air in the driving chamber B is discharged or exhausted from the second opening 18a to flow through the air flow passage F and is discharged from the first opening 17a to the outside of the pump body 2.

In a case where the piston 12 is operated in a direction where air is discharged, i.e., in an air discharge direction, the exhaust valve 23 is opened so that air in the pressure increasing and decreasing chamber A is discharged to the air exhaust void 21b to flow through the fluid passage E and is discharged from the first opening 17a to the outside of the pump body 2. At the same time, air is suctioned from the second opening 18a into the driving chamber B. Because the intake valve 22 is closed, air in the pressure increasing and decreasing chamber A is inhibited from flowing backwards to the air intake void 21a.

Fig. 2 illustrates a perspective view of an electric pump 1 including the pump body 2, a stay 3 fixed to the pump body 2, and a bracket 4 attached to the stay 3. The stay 3 is an intermediate member made of metal for attaching the pump body 2 to the bracket 4. The stay 3 is fixed to the pump body 2 by a bolt, for example, so that the stay 3 is united with the pump body 2. The bracket 4 is a metal member formed in an annular shape to surround the pump body 2. As illustrated in Fig. 3, three bush attachment bores 5 are formed to extend through a vertical direction at a support surface 4a of the bracket 4 so that the bush attachment bores 5 are arranged at substantially even intervals in a circumferential direction of the bracket 4. Bushes 6 are fitted to the bush attachment bores 5 respectively. The bracket 4 is attached to the stay 3 via the bushes 6 in a state where the rotation shaft 14a is positioned perpendicular to the support surface 4a.

As illustrated in Fig. 3, three circular penetration bores, in addition to the three bush attachment bores 5, are formed at the bracket 4. The circular penetration bores are provided for fixing the electric pump 1 to a vehicle body.

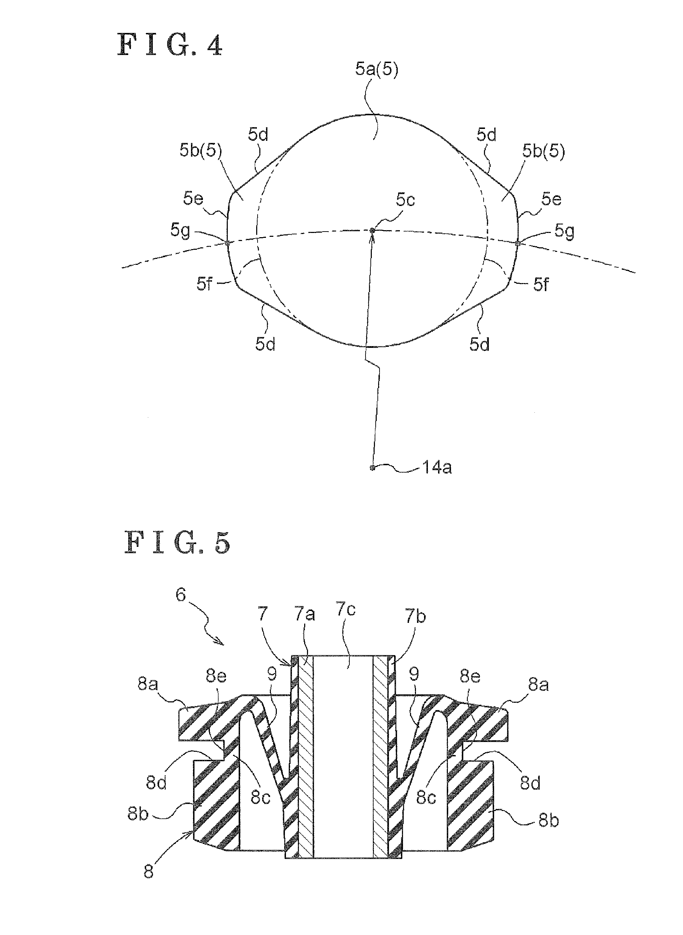

As illustrated in Fig. 4, each of the bush attachment bores 5 is a single bore including a base portion 5a formed in a circular bore (circle) and two expansion portions 5b extending or expanding from the base portion 5a in a circumferential direction of the motor 14. An outer edge of the expansion portion 5b includes two tangent portions 5d serving as a tangent line of the circle of the base portion 5a, a curved end portion 5e arranged at a side away from the base portion 5a so as to smoothly connect the two tangent portions 5d, and an arc portion 5f arranged at a side close to the base portion 5a to serve as an imaginary circular arc of the base portion 5a. The width of the expansion portion 5b in a radial direction of the motor 14, i.e., a distance between the two tangent portions 5d, is gradually decreasing in a direction away from the base portion 5a in the circumferential direction of the motor 14.

A furthest point 5g positioned on the end portion 5e and most away from a center 5c of the base portion 5a is arranged on a circumference of a circle of which the center corresponds to the rotation shaft 14a of the motor 14 and the radius corresponds to a distance from the rotation shaft 14a to the center 5c of the base portion 5a. The aforementioned circle will be hereinafter referred to as a motor concentric circle. Two of the furthest points 5g of the expansion portions 5b and the center 5c are inhibited from being provided on a straight line and are provided on the circumference of the motor concentric circle accordingly.

As illustrated in Fig. 5, each of the bushes 6 includes a circular inner cylindrical portion 7 serving as a shaft member, a circular outer cylindrical portion 8 arranged coaxially with the inner cylindrical portion 7 and surrounding the inner cylindrical portion 7, and an elastic portion 9 having a thin plate form and formed to connect the inner cylindrical portion 7 and the outer cylindrical portion 8. The inner cylindrical portion 7 is movable three-dimensionally relative to the outer cylindrical portion 8 within a range where the elastic portion 9 is deformable.

The inner cylindrical portion 7 includes a metal pipe portion 7a made of metal and including a hollow portion 7c, and a rubber pipe portion 7b tightly formed around the metal pipe portion 7a. The rubber pipe portion 7b, the elastic portion 9, and the outer cylindrical portion 8 are all made of rubber material, for example, of silicon rubber, and are integrally formed one another. Hereinafter, for the explanation of each of the bushes 6, vertical, horizontal, upward and downward directions, for example, are based on Fig. 5.

As illustrated in Fig. 5, a vertical length of the outer cylindrical portion 8 is smaller than that of the inner cylindrical portion 7. An upper portion and a lower portion of the inner cylindrical portion 7 project from an uppermost surface and a lowermost surface of the outer cylindrical portion 8 respectively. The outer cylindrical portion 8 includes an upper flange portion 8a provided at an upper side, a lower flange portion 8b provided at a lower side, and an intermediate portion 8c provided between the upper flange portion 8a and the lower flange portion 8b. Each of the upper flange portion 8a, the lower flange portion 8b, and the intermediate portion 8c is formed in a circular shape in a plan view. Outer diameters of the upper flange portion 8a and the lower flange portion 8b are greater than a diameter of the base portion 5a of the bush attachment bore 5. An outer diameter of the intermediate portion 8c is substantially the same as the diameter of the base portion 5a. That is, the base portion 5a is formed in a shape similar to a portion of the bush 6 fitted to the bush attachment bore 5. Because the outer diameter of the intermediate portion 8c is smaller than the outer diameter of each of the upper flange portion 8a and the lower flange portion 8b, an annular groove 8d is formed at an outer side of the intermediate portion 8c between the upper flange portion 8a and the lower flange portion 8b. A groove width of the annular groove 8d, i.e., a vertical length of the intermediate portion 8c, is substantially the same as a thickness of the bracket 4.

The bush 6 is fitted to the bush attachment bore 5 of the bracket 4. At this time, the intermediate portion 8c is inserted into the base portion 5a so that an outer peripheral surface 8e of the intermediate portion 8c serving as a bottom surface of the annular groove 8d makes contact with a wall surface of an inner peripheral portion of the base portion 5a. The upper flange portion 8a and the lower flange portion 8b of the outer cylindrical portion 8 sandwich and hold the bracket 4 to thereby fix the bush 6 to the bracket 4. According to the first embodiment, because the bush attachment bore 5 is larger in the circumferential direction of the motor 14 than the intermediate portion 8c by the expansion portions 5b, the bush 6 may be easily fixed to the bush attachment bore 5.

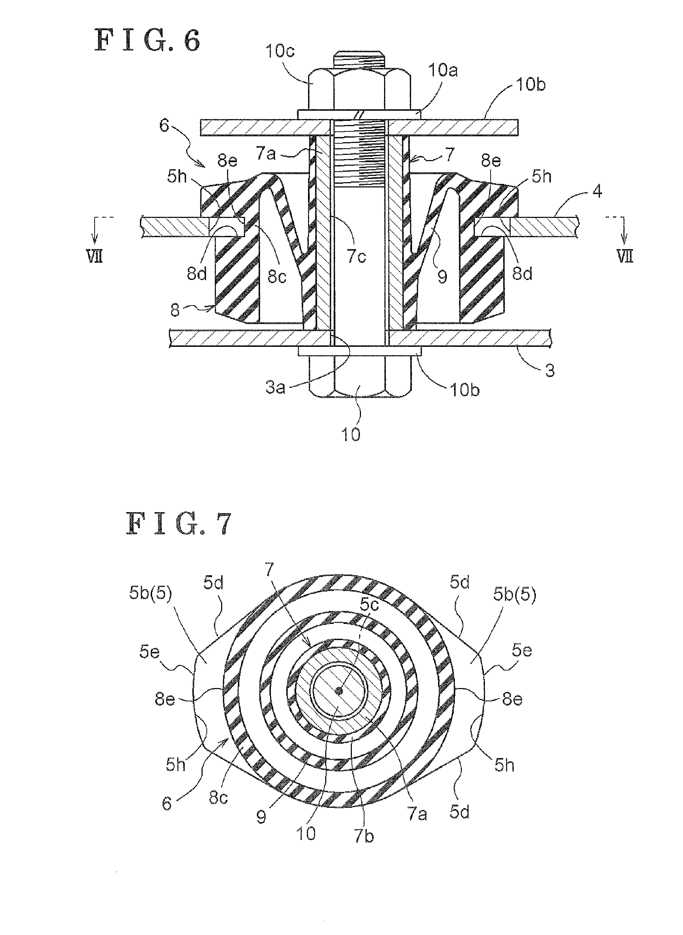

The bracket 4 fitted to the bush 6 is attached to the stay 3 that is united to the pump body 2. As illustrated in Figs. 6 and 7, a circular bore 3a is formed at the stay 3 so that the circular bore 3a is positioned to overlap the base portion 5a in a state where the stay 3 is assembled on the bracket 4 and so that the circular bore 3a is coaxial with the base portion 5a. The circular bore 3a includes a diameter substantially the same as an inner diameter of the inner cylindrical portion 7. The stay 3 and the bracket 4 are placed on each other and thereafter a bolt 10 is inserted into the hollow portion 7c of the inner cylindrical portion 7 and the circular bore 3a to be tightened by a nut 10c via a spring washer 10a and a flat washer 10b, which results in a completion of the attachment of the bracket 4 and the stay 3. In the aforementioned attachment state, the bracket 4 and the stay 3 (the pump body 2) are inhibited from directly contacting each other, i.e., the bushes 6 are disposed between the bracket 4 and the stay 3.

In a case where no oscillation or vibration occurs at the pump body 2, the inner cylindrical portion 7 and the outer cylindrical portion 8 are maintained coaxially with each other. In a case where a normal vibration, i.e., a vibration in a state where the pump body 2 is driven in a normal condition, is generated at the pump body 2, the vibration is transmitted to the stay 3, which causes the inner cylindrical portion 7 to vibrate. Because the vibration of the inner cylindrical portion 7 is absorbed by a deformation of the elastic portion 9, the vibration is unlikely to be transmitted to the outer cylindrical portion 8. Accordingly, even when the vibration is generated at the pump body 2, the bracket 4 disposed or held by the outer cylindrical portion 8 is unlikely to vibrate or oscillate.

In a case where a greater vibration than a vibration in a state where the pump body 2 is driven in the normal condition is generated at the pump body 2, the vibration is transmitted to the inner cylindrical portion 7, which leads to the deformation of the elastic portion 9. According to such vibration, a vibration component in the circumferential direction of the motor 14 in which the motor 14 rotates is the greatest. Thus, the inner cylindrical portion 7 moves while the elastic portion 9 is deformed in the circumferential direction relative to the rotation shaft 14a. Only the deformation of the elastic portion 9, however, is unable to absorb the vibration of the inner cylindrical portion 7. That is, the inner cylindrical portion 7 may hit or collide with the outer cylindrical portion 8 beyond the elastic portion 9.

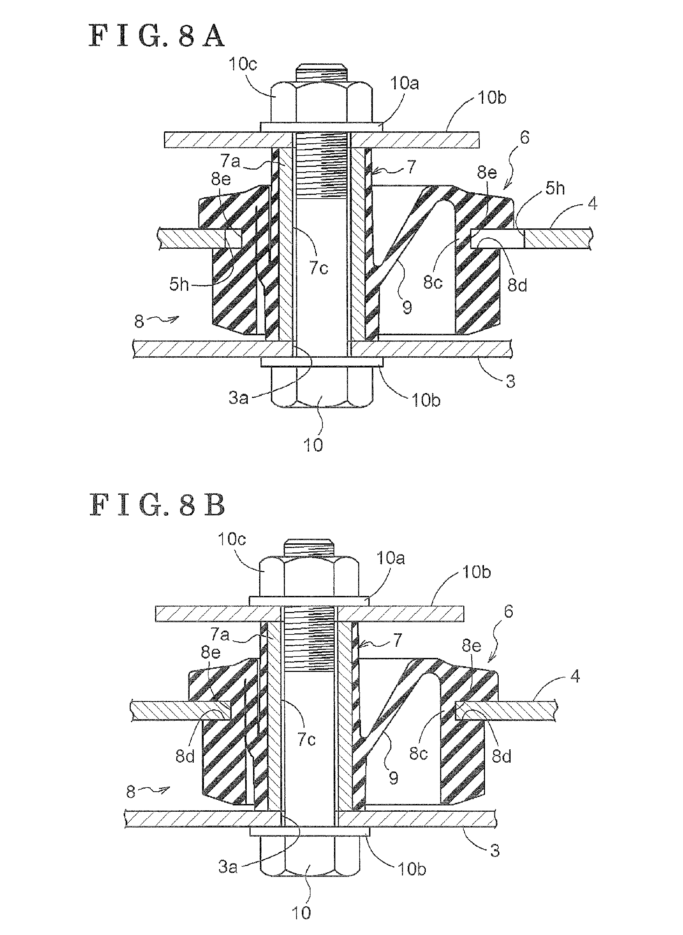

In a case where the outer cylindrical portion 8 is contacted or hit by the inner cylindrical portion 7, the outer cylindrical portion 8 moves in the circumferential direction of the motor 14 while being deformed. However, because the bush attachment bore 5 includes the expansion portions 5b in the circumferential direction, the outer peripheral surface 8e of the intermediate portion 8c is inhibited from hitting a wall surface 5h (see Fig. 6) of the end portion 5e of the bush attachment bore 5. Thus, a hitting sound or noise by the hitting or collision between the bush 6 and the bracket 4 is inhibited from occurring. As illustrated in Fig. 8A, even when the inner cylindrical portion 7 hits or collides with the outer cylindrical portion 8, a clearance is formed, because of the expansion portion 5b, between the outer peripheral surface 8e and the wall surface 5h. Therefore, the outer peripheral surface 8e is unlikely to hit or collide with the wall surface 5h. The hitting sound or noise by the hitting between the bush 6 and the bracket 4 may be reduced.

While the outer cylindrical portion 8 is moving, the outer peripheral surface 8e of the intermediate portion 8c makes contact with the tangent portions 5d of the bush attachment bore 5. Nevertheless, only a small component of force serving as a portion of a force in the circumferential direction of the bush 6 is applied to the tangent portions 5d. In addition, after the outer peripheral surface 8e makes contact with the tangent portions 5d, the bush 6 is able to further move in the circumferential direction by means of the clearance formed by the expansion portion 5b. According to the first embodiment, the furthest point 5g is positioned on the circumference of the motor concentric circle. That is, the vibration generating direction and the direction in which the expansion portion 5b is formed (i.e., the expansion portion 5b extends in the circumferential direction of the motor 14) coincide with each other. The bush 6 thus smoothly moves in the circumferential direction of the motor 14 to thereby reduce an occurrence of hitting sound by the hitting or contact between the outer peripheral surface 8e and the tangent portions 5d.

Fig. 8B is a cross-sectional view illustrating a state same as that in Fig. 8A, according to a known electric pump. According to the known electric pump illustrated in Fig. 8B, a circular bush attachment bore having the same size as the base portion 5a is formed at the bracket 4. The expansion portion 5b is not provided. In addition, the bush 6 same as the first embodiment is provided. As illustrated in Fig. 8B, no clearance is formed between the outer peripheral surface 8e of the intermediate portion 8c and a wall surface of an end portion of the bush attachment bore. Thus, in a case where the inner cylindrical portion 7 hits or collides with the outer cylindrical portion 8, the outer cylindrical portion 8 is unable to move. Thus, the outer peripheral surface 8e hits the wall surface of the end portion of the bush attachment bore to thereby generate the hitting sound.

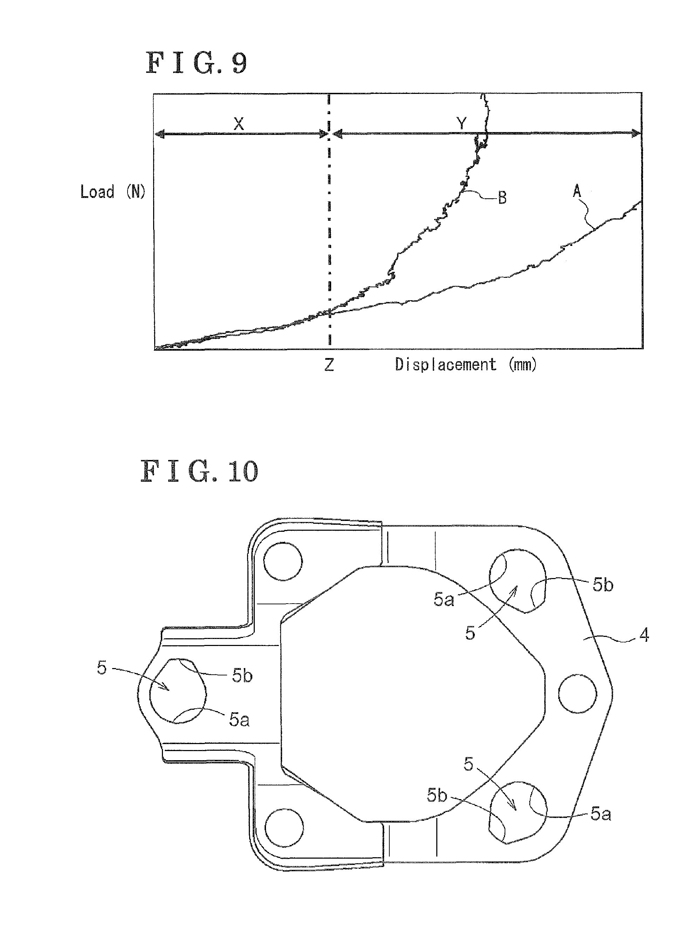

Fig. 9 is a graph illustrating a relationship between a displacement of the metal pipe portion 7a of the inner cylindrical portion 7 in a case where the metal pipe portion 7a moves on the circumference of the motor concentric circle, and a load applied at that time to the rubber pipe portion 7b of the inner cylindrical portion 7 in the tangent direction of the motor concentric circle. In Fig. 9, a horizontal axis indicates the displacement of the metal pipe portion 7a while a vertical axis indicates a load applied to the rubber pipe portion 7b. Characteristics A in Fig. 9 illustrate characteristics of the electric pump 1 including the bush attachment bore 5 according to the first embodiment. Characteristics B in Fig. 9 illustrate characteristics of a known electric pump. The graph in Fig. 9 indirectly illustrates an existence of occurrence of hitting sound.

In a region X in Fig. 9, no difference is found between the characteristics A and the characteristics B. In a region Y, the inclination of the characteristics A is the same as in the region X. However, the inclination of the characteristics B in the region Y is greater than in the region X. A displacement Z is a displacement of the metal pipe portion 7a obtained in a case where the inner cylindrical portion 7 hits the outer cylindrical portion 8 via the elastic portion 9. In the region Y, the inclination of the characteristics B increases rapidly and the load applied to the rubber pipe portion 7b increases drastically. That is, the intermediate portion 8c of the bush 6 collides with the bracket 4, which leads to the occurrence of hitting sound. According to the characteristics A, the load applied to the rubber pipe portion 7b is inhibited from increasing drastically in the region Y. That is, even when the displacement of the bush 6 increases, the intermediate portion 8c of the bush 6 is unlikely to hit or collide with the wall surface of the bush attachment bore 5, which leads to a reduction of occurrence of hitting sound.

According to the first embodiment, the width of the expansion portion 5b in the radial direction of the motor 14, i.e., the distance between the two tangent portions 5d, is gradually decreasing in the direction away from the base portion 5a in the circumferential direction of the motor 14. Thus, when the bush 6 moves in the circumferential direction, the intermediate portion 8c elastically deforms. After the large vibration is substantially cleared, the bush 6 is automatically returned by a restoring force thereof to an initial position, i.e., a position at which the base portion 5a is arranged.

### [Second embodiment]

A second embodiment will be explained with reference to Fig. 10. An explanation of a configuration of the second embodiment substantially similar to the first embodiment will be omitted. In addition, similar components of the second embodiment to those of the first embodiment bear the same reference numerals as the first embodiment. In Fig. 10, the expansion portion 5b is formed at one side of the base portion 5a. In a case where the motor 14 is stopping while decelerating from a state where the motor 14 rotates in the clockwise direction, the stay 3 arranged around the motor 14 tends to rotate in the clockwise direction in the same way as the motor 14 by an inertia force and the bush 6 also rotates in the clockwise direction. In a case where the motor 14 vibrates greater than a case where the motor 14 is in a normal rotating state, i.e., a greater vibration than a vibration in a state where the pump body 2 is driven in the normal condition is generated at the pump body 2, the force applied in the clockwise direction increases. At this time, depending on types of the motor 14, the large vibration state of the motor 14 may be cleared for a short time period because of the rapid decrease of the number of rotations of the motor 14. In such case, once the bush 6 moves upon the occurrence of vibration of the motor 14 and then the intermediate portion 8c deforms, the large vibration state of the motor 14 is cleared by the time the intermediate portion 8c is restored. Thus, a force (vibration) applied in the counterclockwise direction is inhibited from increasing. Therefore, the expansion portion 5b formed at one side of the base portion 5a in the clockwise direction may decrease the occurrence of hitting sound and may lead to the bush attachment bore 5 in a reduced size. In addition, the strength of the bracket 4 is inhibited from decreasing.

### [Third embodiment]

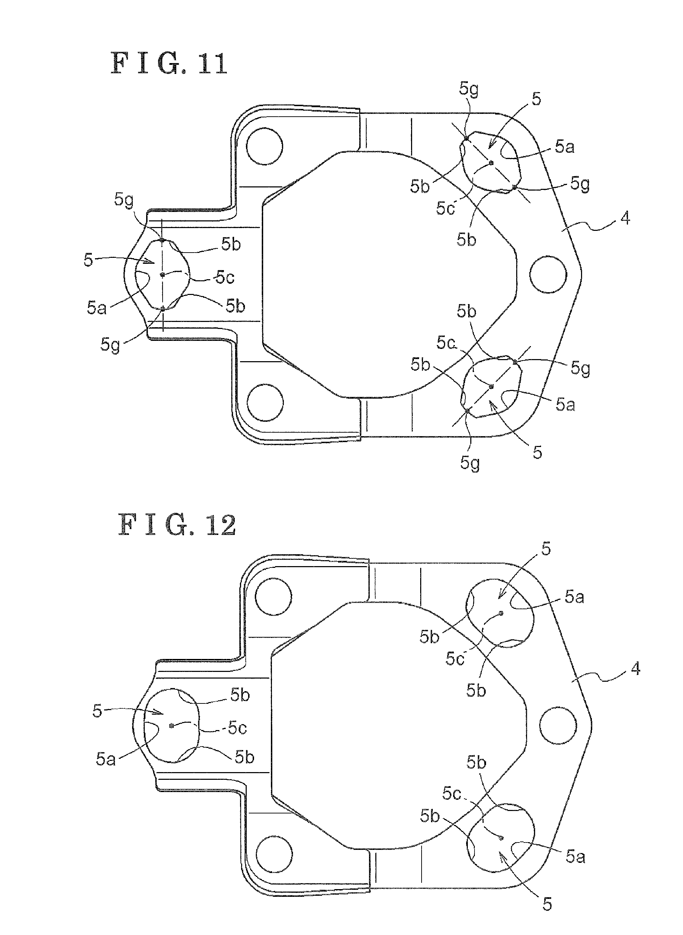

A third embodiment will be explained with reference to Fig. 11. An explanation of a configuration of the third embodiment substantially similar to the first embodiment will be omitted. In addition, similar components of the third embodiment to those of the first embodiment bear the same reference numerals as the first embodiment. In Fig. 11, the bush attachment bore 5 is formed so that the furthest points 5g of the expansion portions 5b and the center 5c of the base portion 5a are arranged on the straight line. The aforementioned configuration of the bush attachment bore 5 may be desirable in a case where the arc of the motor concentric circle nearly forms a straight line because of a large outer diameter of the motor 14, for example. The bush attachment bore 5 may be easily processed accordingly.

### [Fourth embodiment]

A fourth embodiment will be explained with reference to Fig. 12. An explanation of a configuration of the fourth embodiment substantially similar to the first embodiment will be omitted. In addition, similar components of the fourth embodiment to those of the first embodiment bear the same reference numerals as the first embodiment. In Fig. 12, the width in the radial direction of each of the two expansion portions 5b of the bush attachment bore 5 is constant and unchanged, i.e., is inhibited from decreasing in a direction away from the base portion 5a. That is, the bush attachment bore 5 is an elongated bore having the diameter of the base portion 5a. A locus of the center 5c of the base portion 5a constituting the elongated bore is arranged on the circumference of the motor concentric circle. According to the fourth embodiment, even when the greater vibration than the vibration in the normal rotating state of the motor 14 is cleared, the bush 6 is inhibited from automatically returning to the initial position, i.e., the position at which the base portion 5a is provided. Nevertheless, because the width of the expansion portion 5b in the radial direction is constant and the size of the bush attachment bore 5 is larger than that of the first embodiment, the bush 6 and the bracket 4 are unlikely to hit each other even when the vibration is greater than that in the normal rotating state of the motor 14, which reduces an occurrence of hitting sound.

### [Fifth embodiment]

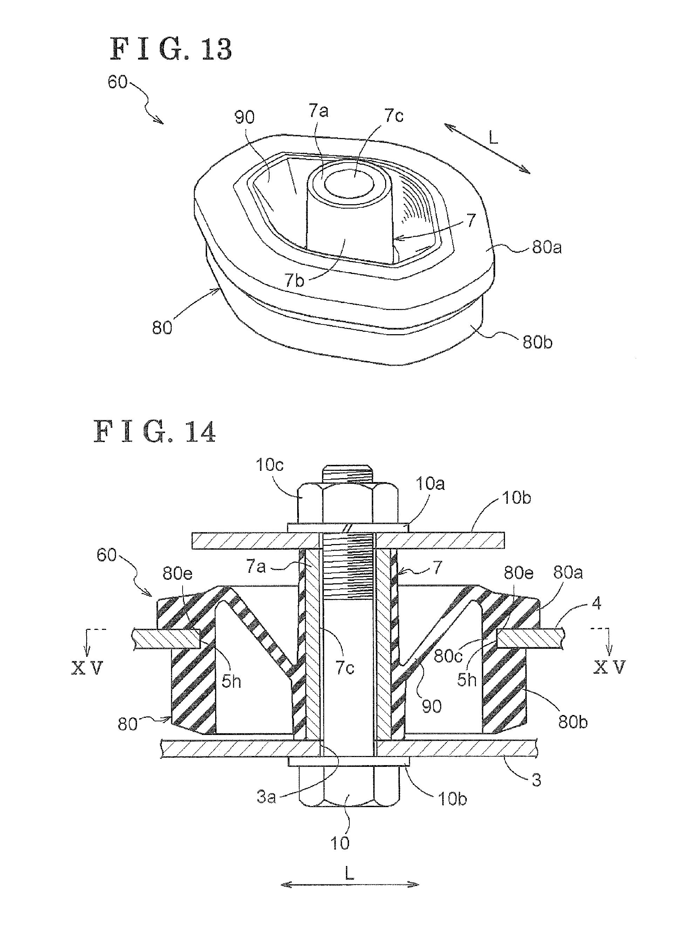

A fifth embodiment will be explained with reference to Figs. 13 to 15. The fifth embodiment includes a bush 60 which is different from the bush 6 according to the first embodiment. The bush attachment bore 5 according to the fifth embodiment is the same as the first embodiment.

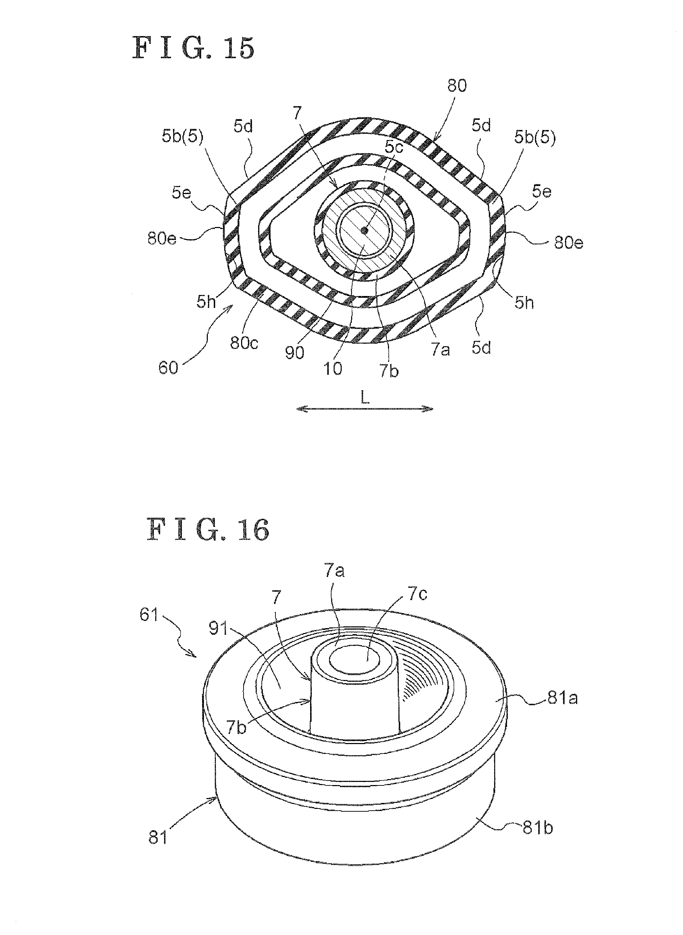

The bush 60 is formed to extend in a direction corresponding to the circumferential direction of the motor 14 so as to conform to the shape of the bush attachment bore 5 that extends in the circumferential direction in a case where the bush 60 is fitted to the bush attachment bore 5. That is, the bush 60 includes an outer cylindrical portion 80 including an upper flange portion 80a, a lower flange portion 80b, and an intermediate portion 80c, the portions 80a, 80b, and 80c being formed in a similar shape to the shape of the bush attachment bore 5 in a plan view. Specifically, the intermediate portion 80c has the same size as the bush attachment bore 5. As illustrated in Figs. 14 and 15, in a case where the bush 60 is fitted to the bush attachment bore 5, an outer peripheral surface 80e of the outer cylindrical portion 80 is fully and thoroughly in contact with an inner peripheral surface of the bush attachment bore 5. The upper flange portion 80a and the lower flange portion 80b sandwich and hold the bracket 4 therebetween so as to fix the bush 60.

According to the fifth embodiment, the size of the inner cylindrical portion 7 is the same as that of the first embodiment. Accordingly, a longitudinal length L of an elastic portion 90 connecting the inner cylindrical portion 7 and the outer cylindrical portion 80 extending in the circumferential direction of the motor 14 when the bush 60 is fitted to the bush attachment bore 5 is longer than a length of the elastic portion 9 of the bush 6 according to the first embodiment.

In a case where the greater vibration than the vibration in the normal rotating state of the motor 14 occurs at the pump body 2 including the bush 60, the vibration is transmitted to the inner cylindrical portion 7 via the stay 3 to thereby vibrate or oscillate the inner cylindrical portion 7. In the aforementioned vibration, a vibration component in the circumferential direction of the motor 14 is the greatest. Thus, the inner cylindrical portion 7 moves in the circumferential direction while the elastic portion 90 in the longitudinal direction L elastically deforms. As illustrated in Figs. 14 and 15, because the length of the elastic portion 90 in the longitudinal direction L is longer than that of the elastic portion 9 of the first embodiment, the vibration of the inner cylindrical portion 7 is absorbed by the deformation of the elastic portion 90 and is unlikely to be transmitted to the outer cylindrical portion 80. Consequently, the inner cylindrical portion 7 may be inhibited from hitting or colliding with the outer cylindrical portion 80. The outer cylindrical portion 80, specifically, the bush 60 is unlikely to move in the circumferential direction to thereby reduce occurrence of hitting sound caused by the hitting or collision between the bush 60 and the bracket 4.

### [Sixth embodiment]

A sixth embodiment will be explained with reference to Figs. 16 to 18. The sixth embodiment includes a bush 61 which is different from the bush 6 according to the first embodiment. The bush attachment bore 5 according to the sixth embodiment is the same as the first embodiment.

According to the sixth embodiment, an outer cylindrical portion 81 of the bush 61 includes a similar form as an enlarged form of the outer cylindrical portion 8 of the bush 6 according to the first embodiment. That is, the outer cylindrical portion 81 includes an upper flange portion 81a, a lower flange portion 81b, and an intermediate portion 81c each of which is formed in a circular shape in a plan view. An outer peripheral length of an outer peripheral surface 81e is substantially equal to a length of an entire inner peripheral surface of the bush attachment bore 5. The size of the inner cylindrical portion 7 is not enlarged and is substantially the same as the size according to the bush 6 of the first embodiment. Accordingly, a radial length of an elastic portion 91 connecting the inner cylindrical portion 7 and the outer cylindrical portion 81 is longer than the radial length of the elastic portion 9 of the bush 6 according to the first embodiment.

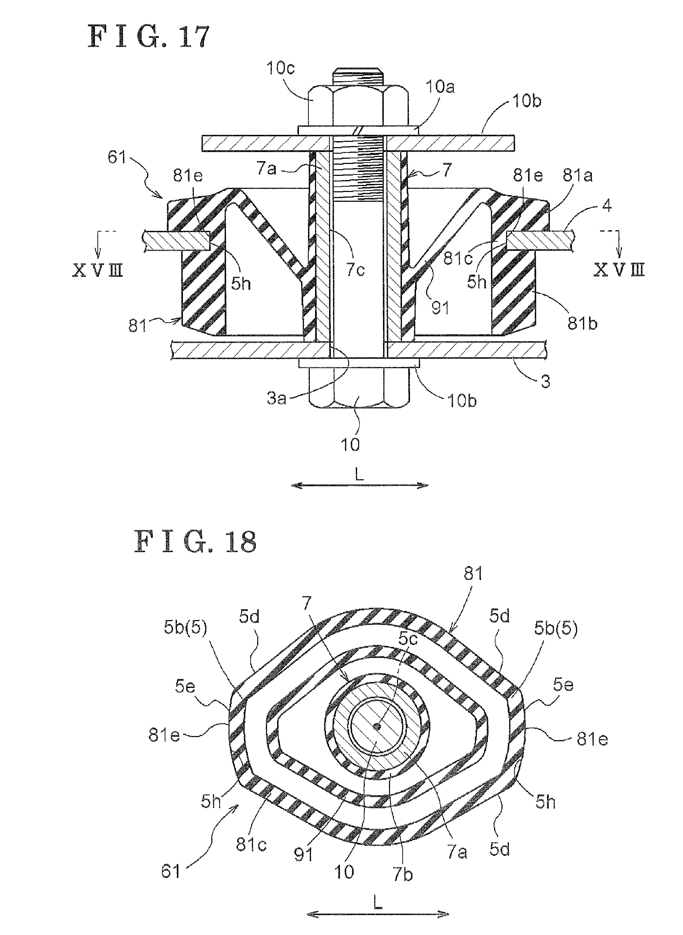

As illustrated in Figs. 17 and 18, in a case where the bush 61 is fitted to the bush attachment bore 5, the bush 61 is deformed so as to conform to the form of the bush attachment bore 5. As a result, when fitted to the bush attachment bore 5, the bush 61 is formed in a form similar to the bush 60 of the fifth embodiment. That is, in a state where the bush 61 is fitted to the bush attachment bore 5, the longitudinal length L of the elastic portion 91 connecting the inner cylindrical portion 7 and the outer cylindrical portion 81 extending in the circumferential direction of the motor 14 when the bush 61 is fitted to the bush attachment bore 5 is longer than the length of the elastic portion 9 of the bush 6 according to the first embodiment. At this time, the outer peripheral surface 81e is fully and thoroughly in contact with the entire inner peripheral surface including the wall surface 5h of the bush attachment bore 5. The upper flange portion 81a and the lower flange portion 81b sandwich and hold the bracket 4 therebetween so as to fix the bush 61.

In the aforementioned state, in a case where the greater vibration than the vibration in the normal rotating state of the motor 14 occurs at the pump body 2, the vibration is transmitted to the inner cylindrical portion 7 via the stay 3 to thereby vibrate or oscillate the inner cylindrical portion 7. In the aforementioned vibration, a vibration component in the circumferential direction of the motor 14 is the greatest. Thus, the inner cylindrical portion 7 moves in the circumferential direction while the elastic portion 91 in the longitudinal direction L elastically deforms. As illustrated in Figs. 17 and 18, because the length of the elastic portion 91 in the longitudinal direction L is longer than that of the elastic portion 9 of the first embodiment, the vibration of the inner cylindrical portion 7 is absorbed by the deformation of the elastic portion 91 and is unlikely to be transmitted to the outer cylindrical portion 81. Consequently, the inner cylindrical portion 7 may be inhibited from hitting or colliding with the outer cylindrical portion 81. The outer cylindrical portion 81, specifically, the bush 61, is unlikely to move in the circumferential direction to thereby reduce occurrence of hitting sound caused by the hitting or collision between the bush 61 and the bracket 4.

The electric pump may be achieved by combination of any of the aforementioned first to sixth embodiments wherever possible.

According to the aforementioned first to sixth embodiments, even in a case where the greater vibration than the vibration in the normal rotating state of the motor 14 occurs at the pump body 2, the bush 6, 60, 61 is unlikely to hit or collide with the bracket 4.

According to the aforementioned embodiments, in a case of the greater vibration than the vibration in the normal rotating state of the motor 14, the vibration in the circumferential direction (the rotation direction) of the motor 14 increases. Thus, the bush 6, 60, 61 moving in the circumferential direction may hit or collide with the bracket 4. According to the aforementioned embodiments, however, the bush attachment bore 5 formed at the bracket 4 extends or expands in the circumferential direction. Accordingly, the bush 6, 60, 61 may be inhibited from hitting the bracket 4 and the occurrence of hitting sound is reduced even when the motor 14 vibrates and then the bush 6, 60, 61 moves in the circumferential direction.

According to the aforementioned embodiments, the expansion portion 5b includes the width in the radial direction of the motor 14, the width gradually decreasing in a direction away from the base portion 5a.

Because the width of the expansion portion 5b in the radial direction of the motor 14 is gradually decreasing in the direction away from the base portion 5a in the circumferential direction, the bush 6, 60, 61 is deformed when moving in the circumferential direction. According to the aforementioned embodiments, even in a case where the bush 6, 60, 61 moves in the circumferential direction by the vibration of the motor 14, the bush 6, 60, 61 that is deformed is returned by the restoring force thereof to a position where the base portion 5a is arranged after the larger vibration is substantially cleared. Thus, even in a case where the motor 14 repeats driving and stopping and therefore the large vibration occurs, the bush 6, 60, 61 is unlikely to hit the bracket 4, which results in the reduction of the occurrence of hitting sound.

According to the aforementioned embodiments, the expansion portion 5b is formed at each of both sides of the base portion 5a in the circumferential direction of the motor 14.

In a case where the vibration of the motor 14 continues for a long time period, the bush 6, 60, 61 greatly moves in both directions, i.e., the clockwise and counterclockwise directions. At this time, the expansion portions 5b formed at both sides of the base portion 5a in the circumferential direction of the motor 14 inhibit the hitting of the bush 6, 60, 61 relative to the bracket 4, which reduces the occurrence of hitting sound.

According to the aforementioned embodiments, the base portion 5a includes a circular form and the expansion portion 5b includes the furthest point 5g on an outer edge from the center 5c of the base portion 5a, the furthest point 5g being positioned on a circumference of a circle of which the center corresponds to the rotation shaft 14a of the motor 14 and the radius corresponds to a distance from the rotation shaft 14a to the center 5c of the base portion 5a.

The vibration direction of the motor 14 when the motor 14 vibrates greater than in the normal rotating state corresponds to a tangent direction of the circumference of the circle of which the center corresponds to the rotation shaft 14a and the radius corresponds to a distance from the rotation shaft 14a to the center 5c. In a case of an electric pump of which the aforementioned radius is small, the vibration direction greatly varies. According to the aforementioned embodiments, the vibration direction matches the direction where the expansion portion 5b is formed. Thus, even when the vibration direction varies greatly, the bush 6, 60, 61 is unlikely to hit the bracket 4 to thereby inhibit the occurrence of hitting sound.

## Claims

1. An electric pump (1) comprising:
a motor (14);
a bracket (4) including a support surface (4a) arranged to be perpendicular to a rotation shaft (14a) of the motor (14) and a bush attachment bore (5) provided to be perpendicular to the support surface (4a); and
a bush (6, 60, 61) fitted to the bush attachment bore (5), wherein
the bush attachment bore (5) includes a base portion (5a) formed in a shape similar to a portion of the bush (6, 60, 61) fitted to the bush attachment bore (5), the bush attachment bore (5) including an expansion portion (5b) integrally formed with the base portion (5a) and extending in a circumferential direction of the motor (14).

2. The electric pump (1) according to claim 1, wherein the expansion portion (5b) includes a width in a radial direction of the motor (14), the width gradually decreasing in a direction away from the base portion (5a).

3. The electric pump (1) according to either claim 1 or 2, wherein the expansion portion (5b) is formed at each of both sides of the base portion (5a) in the circumferential direction of the motor (14).

4. The electric pump (1) according to any one of claims 1 through 3, wherein the base portion (5a) includes a circular form and the expansion portion (5b) includes a furthest point (5g) on an outer edge from a center (5c) of the base portion (5a), the furthest point (5g) being positioned on a circumference of a circle of which a center corresponds to the rotation shaft (14a) of the motor (14) and a radius corresponds to a distance from the rotation shaft (14a) to the center (5c) of the base portion (5a).
